# FASCICULE DE BREVET EUROPEEN

(11) **EP 2 616 231 B1**
(45) Date de publication et mention de la délivrance du brevet: **21.06.2017**
(21) Numéro de dépôt: 11773047.3
(22) Date de dépôt: 08.09.2011
(51) Int. Cl.: B29C 70/32, B29C 53/12, F16F 1/366, B29C 53/62

(54) **PROCEDE DE FABRICATION D'UN RESSORT DE SUSPENSION EN MATERIAU COMPOSITE DE MISE EN OEUVRE SIMPLIFIEE**
VEREINFACHTES VERFAHREN ZUR HERSTELLUNG EINER AUFHÄNGEFEDER AUS EINEM VERBUNDSTOFF
SIMPLIFIED METHOD FOR THE PRODUCTION OF A SUSPENSION SPRING MADE FROM A COMPOSITE MATERIAL

(30) Priorité: 15.09.2010 FR 1057386
(43) Date de publication de la demande: 24.07.2013
(73) Titulaire: Peugeot Citroën Automobiles SA, 78140 Vélizy Villacoublay (FR)
(72) Inventeur: CARRO, Damien, F-22150 Gausson (FR); MONIN, Martine, F-92000 Nanterre (FR); RAOULT, Ida, F-91120 Palaiseau (FR); SARETE, Hélène, F-78140 Velizy Villacoublay (FR); CHARTIER, Anabelle, F-78180 Montigny Le Bretonneaux (FR)
(86) Numéro de dépôt international: PCT/FR2011/052051
(87) Numéro de publication internationale: WO 2012/035239

(56) Documents cités:
- DE-A1- 3 031 582
- DE-A1-102006 010 543
- DE-A1-102007 040 609
- JP-A- 52 036 250
- US-A- 5 988 612
- US-A1- 2009 243 174

## Description

La présente invention concerne un procédé de fabrication d'un ressort de suspension pour véhicule automobile en matériau composite de mise en oeuvre simplifiée.

Elle concerne plus particulièrement un procédé de fabrication d'un ressort de suspension notamment pour véhicule automobile, formé d'un matériau composite incluant des fibres et de la résine, comprenant, sur une même filière de fabrication, les étapes successives :
- d'enroulement, consistant au moyen d'au moins une unité de formation (9, 10), à fabriquer un fil comprenant au moins une couche de fibres enroulées autour d'une âme centrale, la fibre étant préalablement enrobée de résine avant ladite étape d'enroulement,
- de mise en forme du fil autour d'un mandrin animé d'un mouvement de rotation, tirant le fil au fur et à mesure de sa formation et positionnant celui-ci dans une forme hélicoïdale,

Un procédé de ce type est connu notamment du document DE 10 2007 040609 A1. Il permet de fabriquer un ressort en matériau composite en utilisant une résine liquide contenue dans un bain, la fibre lors de son acheminement vers la filière pour être enroulée autour d'une âme centrale, chemine dans le bain de résine liquide. Le fil ainsi obtenu est mis en forme autour d'un mandrin animé d'un mouvement de rotation, tirant le fil au fur et à mesure de sa formation et positionnant celui-ci dans une forme hélicoïdale.

Cependant, ce procédé est relativement complexe à mettre en oeuvre du fait de la gestion de la résine liquide qui doit imprégner au plus juste la fibre pour assurer au ressort une bonne homogénéité structurelle, sans excès de résine pour ne pas créer des coulées de résine le long du fil avant l'étape de durcissement du ressort.

Le document JP 52 036250 A divulgue un procédé de fabrication en continu d'un ressort comprenant une âme centrale, des fibres autour de ladite âme centrale et la mise en forme de l'ensemble sur un mandrin.

L'invention vise à pallier les inconvénients de l'art antérieur en proposant un procédé de fabrication d'un ressort de suspension notamment pour véhicule automobile, formé d'un matériau composite incluant des fibres et de la résine, de mise en oeuvre simplifiée.

La présente invention concerne un procédé de fabrication d'un ressort conformément à l'objet de la revendication 1.

Selon une première caractéristique de l'invention, une partie des moyens de chauffage est positionnée avant le mandrin et/ou au moins une partie des moyens de chauffage est positionnée autour du mandrin.

Selon une deuxième caractéristique de l'invention, au moins une partie des moyens de chauffage est positionnée entre deux unités de formation, le long de la même filière de fabrication, permettant lors de l'étape d'enroulement, au fil d'être chauffé avant qu'une nouvelle couche de fibre soit enroulée autour de l'âme centrale.

Selon une troisième caractéristique de l'invention, la température de chauffage du fil est comprise entre 180 et 260°C.

Selon une variante de réalisation, l'âme centrale est composée d'un ensemble de fibres coaxiales mises en forme en début de filière.

L'invention sera mieux comprise à la lecture de la description qui va suivre, faite en référence aux figures suivantes qui en illustrent un mode de réalisation non limitatif :
- la figure 1 représente un ressort en matériau composite réalisé selon le procédé de l'invention,
- la figure 2 est une vue schématique en coupe d'un fil en matériau composite apte à constituer le ressort de la figure 1,
- la figure 3 illustre schématiquement la mise en forme du fil de la figure 2 autour d'un mandrin animé d'un mouvement de rotation et de translation, pour fabriquer le ressort de la figure 1,
- la figure 4 représente une filière mettant en oeuvre un premier mode de réalisation du procédé de fabrication selon l'invention, à partir d'une âme centrale composée d'un ensemble de fibres, selon lequel les fibres du fil sont liées les unes aux autres au sein de bacs d'imprégnation,
- la figure 5 illustre une vue schématique en coupe de l'un des bacs d'imprégnation de la figure 4,
- le figure 6 montre respectivement des vues schématiques en coupe transversale et en coupe longitudinale des rouleaux de guidage du fil au sein de la résine du bac d'imprégnation de la figure 5,
- la figure 7 représente une filière mettant en oeuvre un deuxième mode de réalisation du procédé de fabrication selon l'invention, à partir d'une âme centrale composée d'un ensemble de fibres, selon lequel les fibres du fil sont pré-imprégnées de résine et sont liées les unes aux autres par chauffage.

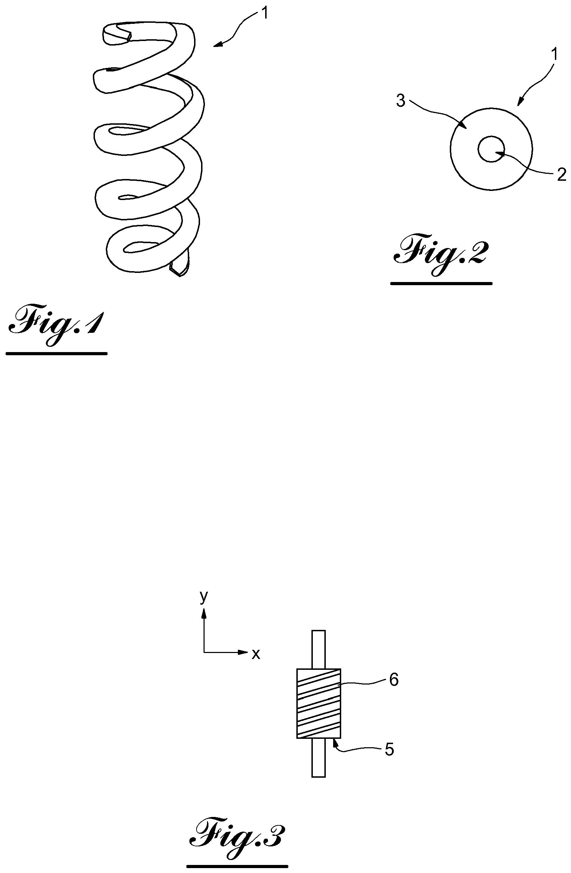

L'invention telle qu'illustrée sur les figures annexées, permet de fabriquer un ressort en matériau composite 1 conforme à celui de la figure 1, pouvant être utilisé comme ressort de suspension dans des véhicules automobiles, et suivant un procédé relativement simple.

Un matériau composite est un matériau constitué d'au moins deux constituants dont les qualités respectives se complètent pour former un matériau aux performances globales améliorées. Parmi ces constituants on retrouve généralement un renfort et une matrice.

La matrice peut être, généralement, de type thermodurcissable (thermodure) ou thermoplastique, les différences se situant dans les méthodes de polymérisation ainsi que dans les propriétés (notamment mécanique, résistance thermique et chimique).

Les renforts garantissent la résistance mécanique de la pièce finale, ces renforts doivent donc être positionnés de telle sorte à pouvoir résister aux efforts qui seront appliqués.

Ces renforts peuvent se présenter sous la forme de tissus de fibres ou bien sous forme de bobine de fibres (rovings). De plus les tissus ou bobines peuvent être pré imprégné, c'est-à-dire qu'ils ont lors de leur fabrication été trempés ou « mélangés » avec de la résine thermodure (cas de tissus pré-imprégnés), ou co-mêlés avec des fils de thermoplastique (tissus et bobines) ou alors imprégnés de poudre de thermoplastique.

Tel que schématiquement représenté sur la figure 2, ce ressort comprend une âme centrale 2 servant de support à au moins une couche ou corde de fibres 3 liées entre elles et à l'âme centrale 2 par de la résine, et assurant la résistance mécanique du ressort.

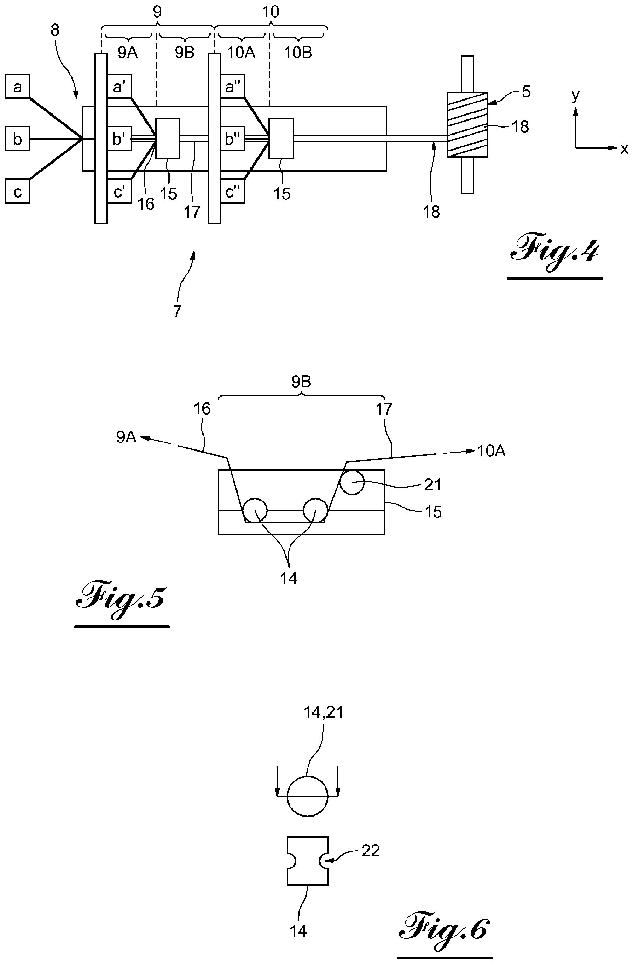

Le procédé selon l'invention permettant la fabrication d'un tel ressort, et représenté sur la figure 3, est un procédé de pultrusion en ligne (ou extrusion en ligne) comprenant deux unités principales consécutives réparties sur une seule et unique filière de fabrication 7, dont un premier mode de réalisation est représenté sur la figure 4, à savoir :
- en amont une ou plusieurs unités de tissage ou d'enroulement 9, 10 de fibres autour d'une âme centrale 2, à l'issue desquelles est obtenu le fil constitutif du ressort. Durant cet enroulement, les fibres sont orientées le plus favorablement possible par rapport aux sollicitations en service, c'est-à-dire de préférence à ±45 degrés voire jusqu'à ±60 degrés vis à vis de l'âme centrale 2.
- en aval une unité de mise en forme du fil obtenu en sortie de la dernière unité d'enroulement, sous une forme hélicoïdale et de solidification de ce fil pour constituer le ressort. Cette mise en forme s'effectue autour d'un mandrin 5 qui est une pièce cylindrique mieux visible sur la figure 3 et ayant une cavité qui a la forme finale du ressort, ce mandrin 5 sert de moule pour le doter de la forme du ressort désiré. On vient positionner le fil dans la gorge 6 du mandrin 5 et ce mandrin 5 est mis en rotation autour de l'axe Y de la figure 3 afin d'entrainer l'enroulement du fil, et est animé d'un mouvement de va-et-vient suivant ce même axe Y. Cette combinaison de mouvement va permettre de mettre en forme le fil selon un profil hélicoïdal sur le mandrin tout en conservant l'orientation angulaire des fibres vis-à-vis de l'âme, établie lors de l'enroulement filamentaire.

Le procédé selon l'invention permet ainsi de fabriquer à partir de fibres et de résine, un ressort dont les fibres constitutives ne se retrouvent pas séparées prématurément de l'âme centrale lorsque le ressort est sollicité.

En effet, étant donné qu'il n'existe aucune étape de transfert manuel ou autre entre la sortie de la sortie de la dernière unité d'enroulement 10 et l'entrée de l'unité de mise en forme 5 du fil, qui attire vers elle par rotation du mandrin 5 le fil issu de la dernière unité d'enroulement 10, la tension de la corde est garantie et leur position autour de l'âme l'est également.

En outre, immédiatement après chaque unité d'enroulement, la filière comprend une unité de liaison 9A, 10A des fibres les unes aux autres 9B, 10B qui garantit leur positionnement relatif et vis à vis de l'âme centrale 2, d'autant plus encore une fois que le fil obtenu est directement tiré et mis en forme par le mandrin consécutif 5.

Le premier type de filière de fabrication permet la réalisation d'un ressort dit ressort à âme centrale pleine, dont l'âme centrale 2 est formée d'un assemblage de fibres a, b, c et dont la corde est constituée d'une première couche de fibres a', b', c' et d'une deuxième couche de fibres a", b", c".

Elle comprend à cet effet les unités successives suivantes :
- une unité 8 de fabrication de l'âme centrale 2 par assemblage de trois fibres a, b, c selon une direction coaxiale, par laquelle est obtenue l'âme centrale 2,
- une unité de formation 9 d'une première couche de fibres a', b', c,' enroulées autour de l'âme centrale. Cette unité se décompose en un poste 9A d'enroulement de trois fibres a', b', c' autour de l'âme obtenue à l'unité précédente 8, et un poste 9B de liaison de ces fibres de cordes a', b', c' entre elles ainsi qu'à l'âme centrale 2 par une résine thermodure :
   * Sur le poste d'enroulement 9B, des bobines de fibres a', b', c' sont disposées à proximité de la filière de fabrication et tournoient autour de autour de l'axe X, permettant l'enroulement des fibres a', b', c' autour de l'âme 2. En outre, chaque fibre a', b', c' est inclinée vis-à-vis de l'âme centrale 2 d'un angle compris entre ±45° et ±60°. On obtient suite à l'enroulement de ces premières fibres de corde a', b', c' autour de l'âme centrale 2, un « fil non lié » 16 ;
   * Sur le poste de liaison 9B, le fil non lié 16 traverse un circuit d'imprégnation contenant une résine thermodure. Ce circuit d'imprégnation 15 est interposé sur le chemin de déplacement du fil non lié 16 vers l'unité de mise en forme du ressort, tel que l'illustre la figure 6, et comprend un bac d'imprégnation contenant la résine d'imprégnation sous forme liquide, deux rouleaux d'immersion 14 du fil non lié 16 dans la résine, disposés horizontalement au sein du bac avec une moitié immergée dans la résine, et sous lesquels le fil aux fibres non liées 16 est contraint de passer pour être immergé dans et imbibé de résine, et un rouleau de délestage 21 également disposé horizontalement mais au-dessus du niveau de la résine liquide et permettant de débarrasser le fil imprégné de résine, de la résine excédentaire. Les rouleaux d'immersion 14 comme le rouleau de délestage 21 comprennent une rainure de guidage du fil 22 illustrée sur la figure 5, formée autour du périmètre du rouleau pour servir de guidage au fil lorsque tracté pour les besoins de fabrication du ressort, cette rainure ayant une profondeur équivalente à l'épaisseur du fil de fibres, et évitant un écrasement de ce fil lors de son passage autour du rouleau concerné.

La résine contenue dans le bac d'imprégnation peut être de type époxy, vinylester.

On obtient à la sortie du circuit d'imprégnation, un fil constitué d'une âme centrale de fibres coaxiales 2, entourée de fibres enroulées autour de l'âme 2 et faisant avec l'axe défini par cette âme centrale 2un angle compris entre ±45° et ±60° formant une première couche de fibres de corde.
- une unité de formation 10 d'une deuxième couche de fibres a", b", c" enroulées autour de la première couche de fibres a', b', c'. Comme son homologue ayant servi à la formation de la première couche de fibres enroulées a', b', c', cette unité 10 comprend un poste d'enroulement de ces fibres a", b", c" autour des premières a', b', c' au moyen de bobines tournoyant autour de l'axe X, et un poste de liaison des deuxièmes fibres a", b", c" aux premières a', b', c' composé d'un circuit d'imprégnation analogue à celui décrit précédemment. On obtient en sortie de cette unité de formation 10, un fil constitué en plus de l'âme centrale 2 de fibres coaxiales et de la première couche de fibres enroulées a', b', c', d'une deuxième couche de fibres enroulées a", b", c". Ce fil présente la composition souhaitée pour fabriquer le ressort de compression.
- L'unité suivante 10 permet de conférer au fil sa forme de ressort hélicoïdal, le fil étant enroulé autour d'un mandrin 5 dans une gorge hélicoïdale de la forme souhaitée pour le ressort, formée sur la paroi extérieure de ce mandrin. Le mandrin 5 est animé d'un mouvement de rotation autour de l'axe Y et d'un mouvement de translation selon ce même axe Y par exemple dans le sens repéré sur la figure 3, pour doter le fil de la forme hélicoïdale recherchée pour le ressort. La vitesse de rotation et de translation du mandrin 5 autour de l'axe Y, et qui permet de tirer le fil selon l'axe X durant son cheminement le long de la filière, est réglée en fonction de la forme de la gorge hélicoïdale, et de la vitesse de rotation des bobines autour de l'axe X pour former les fibres de corde a', b', c', a", b", c". Enfin, pour polymériser la résine, le mandrin sur lequel le fil est enroulé est admis au sein d'un four réglé à une température au moins égale à la température de polymérisation de la résine, et pendant la durée permettant cette polymérisation.

Pour ne pas rompre la filière d'enroulement du fil 18 lors de l'admission du mandrin 5 au sein du four de polymérisation, il peut être prévu qu'un deuxième mandrin dit de transition soit monté sur l'axe Y juste après le premier mandrin 5, avec une gorge hélicoïdale prolongeant celle du premier mandrin 5 en étant animé du même mouvement de rotation et de translation que ce premier mandrin 5, et permettant de poursuivre l'enroulement du fil 18 alors que le premier mandrin a quitté l'axe Y pour être admis au sein du four. Le premier mandrin 5 pourra être monté de nouveau sur l'axe Y une fois la polymérisation de la résine du fil qu'il porte terminée. Si la polymérisation en question est relativement longue, d'autres mandrins supplémentaires peuvent être prévus le long de l'axe Y, avec des moyens de verrouillage l'un à l'autre, permettant de les disposer de façon que leurs gorges soient dans la continuité l'une de l'autre.

Selon le deuxième mode de réalisation de la filière de fabrication d'un ressort en matériau composite selon l'invention, la résine n'est pas de type thermodurcissable mais thermoplastique, de sorte qu'il n'est pas nécessaire de la faire polymériser au sein d'un four, comme ce fût le cas pour la première variante.

Au contraire, cette polymérisation est effectué en même temps que la liaison des fibres de corde les unes aux autres, c'est-à-dire immédiatement après leur enroulement autour de l'âme centrale 2.

Cependant, ce deuxième type de filière présente de nombreuses similitudes avec le premier type, puisque comprend une unité de fabrication 8 d'une âme centrale 2 à partir de trois fibres a, b, c, assemblées coaxialement, une unité de formation 9 d'une première couche de fibres a', b', c' enroulées autour de l'âme centrale, une unité de formation d'une deuxième couche de fibres a", b", c" enroulées autour des premières a', b', c' et une unité d'enroulement hélicoïdal 11 du fil ainsi obtenu autour d'un mandrin 5 de forme complémentaire du ressort à obtenir.

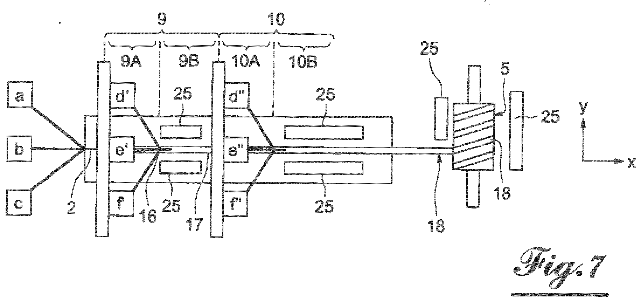

Les seules différences entre ces deux types de filières sont :
- la nature de la résine qui est dans le cas de la figure 7, une résine thermoplastique (PA6, PA66, PA11 ...),
- le traitement des fibres de corde d', e', f' et d", e", f" qui sont pré-imprégnées de cette résine thermoplastique et sont donc enroulées autour de l'âme en étant pré-imprégnées de cette résine. Sans que cela soit indispensable, il est possible que les fibres de l'âme a, b, c soient également imprégnées de résine,
- la liaison des fibres de corde les unes aux autres qui se fait non plus par passage de ces fibres au sein d'une résine liquide puisqu'elles sont déjà pré-imprégnées de résine, mais par ramollissement voire fonte de la résine thermoplastique qui les imprègne sous l'effet de la chaleur procurée par des moyens de chauffage (infrarouge ou ultrason) 25 disposés sur le chemin de fabrication du fil immédiatement après l'enroulement des fibres autour de l'âme 2.

La température de chauffe peut être par exemple comprise entre 180°C et 260°C.

Les fibres pré-imprégnées formant la première couche de corde d', e', f' sont liées les unes aux autres par la résine ramollie voire fondue immédiatement après avoir été enroulées autour de l'âme 2 grâce au chauffage de la résine. Il en est de même pour les fibres de la deuxième couche de corde d", e", f".

Ainsi, les différentes couches de fibres restent souples les unes par autres jusqu'a l'étape de mise en forme du ressort et de mise sous tension des fibres.
- En outre, durant l'enroulement du fil obtenu, sur le mandrin 5, on poursuit voire accentue ce chauffage pour polymériser la résine, ce mandrin 5 étant également entouré de moyens de chauffage 25. Inutile donc de transférer ce mandrin au sein d'un four de polymérisation. La température de chauffage est réglée pour permettre en plus du ramollissement de la résine, sa polymérisation.

Cette variante de réalisation permet d'utiliser différentes type/qualité de fibres.

Le procédé tel que décrit ci-dessus permet d'atteindre les objectifs principaux suivants :
- un gain de masse important par rapport aux ressorts métalliques,
- une meilleure tenue à la corrosion galvanique du matériau composite réalisé par rapport à l'acier
- un procédé facilement industrialisable puisque ne faisant intervenir que des unités simples et permettant la fabrication de pièces analogues voire identiques, étant donné que celles-ci peuvent désormais être fabriquées à partir des matières premières nécessaires (fibres et résine) sur une unique filière mécanisée,
- et permettant de garantir une tension satisfaisante des fibres au sein du ressort étant donné qu'aucune étape de transfert manuel n'intervient entre l'unité de réalisation de la dernière couche de fibres de corde et donc unité d'obtention du fil constitutif du ressort, et l'unité de mise en forme de ce fil suivant un profil hélicoïdal, ces deux unités étant directement consécutif l'un de l'autre le fil obtenu étant tiré par le mandrin le mettant en forme. Les caractéristiques finales du ressort et notamment l'absence de défaut sont ainsi garanties,
- une diversité dans le choix des fibres utilisées puisque celles-ci peuvent être choisies parmi les fibres de verre, de carbone, de basalte et qu'au sein d'une même couche de fibres, elles peuvent être de même nature ou différentes.

## Revendications

1. Procédé de fabrication d'un ressort de suspension notamment pour véhicule automobile, formé d'un matériau composite incluant des fibres et de la résine, comprenant, sur une même filière de fabrication, les étapes successives :
• d'enroulement, consistant au moyen d'au moins une unité de formation (9, 10), à fabriquer un fil comprenant au moins une couche de fibres enroulées autour d'une âme centrale (2), la fibre étant préalablement enrobée de résine avant ladite étape d'enroulement,
• de mise en forme du fil autour d'un mandrin (5) animé d'un mouvement de rotation, tirant le fil au fur et à mesure de sa formation et positionnant celui-ci dans une forme hélicoïdale,
**caractérisé en ce que** les fibres sont des fibres de corde, **en ce que** l'âme centrale (2) est fabriquée à partir de trois fibres assemblées coaxialement, **en ce qu'**au moyen d'au moins deux unités de formations (9, 10) positionnées successives le long de la filière de fabrication, l'étape d'enroulement consiste à fabriquer un fil comprenant au moins deux couches de fibres enroulées autour de l'âme centrale (2), chaque unité de formation (9, 10) enroulant une couche supplémentaire de fibres autour de l'âme centrale (2), **en ce que** le mandrin (5) est de forme complémentaire du ressort à obtenir, **en ce que** la résine est une résine thermoplastique et **en ce que** le procédé comporte au moins des étapes :
• de polymérisation, immédiatement après l'enroulement,
• de liaison du fil, consistant à chauffer le fil par des moyens de chauffage (25) disposés autour de la filière de fabrication, de manière à ramollir la résine pré-imprégnée dans les fibres, pour l'adhésion des fibres entre elles.

2. Procédé selon la revendication 1, **caractérisé en ce qu'**au moins une partie des moyens de chauffage (25) est positionnée avant le mandrin (5).

3. Procédé selon la revendication 1 ou 2, **caractérisé en ce qu'**au moins une partie des moyens de chauffage (25) est positionnée autour du mandrin (5).

4. Procédé selon l'une quelconque des revendications précédentes, **caractérisé en ce qu'**au moins une partie des moyens de chauffage (25) est positionnée entre deux unités de formation (9, 10), le long de la même filière de fabrication, permettant lors de l'étape d'enroulement, au fil d'être chauffé avant qu'une nouvelle couche de fibre soit enroulée autour de l'âme centrale (2).

5. Procédé selon l'une quelconque des revendications précédentes, **caractérisé en ce que** la température de chauffage du fil est comprise entre 180 et 260°C.

6. Procédé selon l'une quelconque des revendications précédentes, **caractérisé en ce que** l'âme centrale est composée d'un ensemble de fibres coaxiales mises en forme en début de filière.

## Patentansprüche

1. Herstellungsverfahren einer Tragfeder, insbesondere für Kraftfahrzeug, die aus einem Verbundwerkstoff hergestellt ist, der Fasern und Harz enthält, das auf einer Düse die aufeinanderfolgenden Schritte umfasst:
• Wickeln, das mittels mindestens einer Formungseinheit (9, 10) darin besteht, einen Faden herzustellen, der mindestens eine Schicht Fasern umfasst, die um eine zentrale Seele (2) gewickelt werden, wobei die Faser zuvor mit Harz vor dem Wickelschritt beschichtet wird,
• Formen des Fadens um einen Dorn (5), der eine Rotationsbewegung ausführt, wobei der Faden allmählich von seiner Formung gezogen und in einer Schraubenform positioniert wird,
**dadurch gekennzeichnet, dass** die Fasern Seilfasern sind, und dass die zentrale Seele (2) ausgehend von drei koaxial zusammengefügten Fasern hergestellt wird, und dass mittels mindestens zwei Formungseinheiten (9, 10), die nacheinander entlang der Düse positioniert sind, der Wickelschritt darin besteht, einen Faden herzustellen, der mindestens zwei Faserschichten umfasst, die um die zentrale Seele (2) aufgewickelt sind, wobei jede Formungseinheit (9, 10) eine zusätzliche Schicht Fasern um die zentrale Seele (2) wickelt, und dass der Dorn (5) eine komplementäre Form zu der zu erhaltenden Feder hat, und dass das Harz eine Thermoplastharz ist, und dass das Verfahren mindestens die folgenden Schritte umfasst:
• Polymerisation unmittelbar nach dem Wickeln,
• Binden des Fadens, das darin besteht, den Faden durch Heizmittel (25), die um die Fertigungsdüse angeordnet sind, derart zu erhitzen, dass das in den Fasern vorimprägnierte Harz zum Haften der Fasern untereinander erweicht.

2. Verfahren nach Anspruch 1, **dadurch gekennzeichnet, dass** mindestens ein Teil der Heizmittel (25) vor dem Dorn (5) positioniert ist.

3. Verfahren nach Anspruch 1 oder 2, **dadurch gekennzeichnet, dass** mindestens ein Teil der Heizmittel (25) um den Dorn (5) positioniert ist.

4. Verfahren nach einem der vorhergehenden Ansprüche, **dadurch gekennzeichnet, dass** mindestens ein Teil der Heizmittel (25) zwischen zwei Formungseinheiten (9, 10) entlang derselben Herstellungsdüse positioniert ist, was es bei dem Schritt des Wickelns dem zuvor erhitzten Faden erlaubt, dass eine neue Faserschicht um die zentrale Seele (2) gewickelt wird.

5. Verfahren nach einem der vorhergehenden Ansprüche, **dadurch gekennzeichnet, dass** die Erhitzungstemperatur des Fadens zwischen 180 und 260 °C liegt.

6. Verfahren nach einem der vorhergehenden Ansprüche, **dadurch gekennzeichnet, dass** die zentrale Seele aus einer Einheit koaxialer Fasern besteht, die zu Beginn der Düse geformt wird.

## Claims

1. A method for the production of a suspension spring in particular for a motor vehicle, made from a composite material including fibres and resin, comprising, on a single production line, the successive steps of:
• winding, consisting by means of at least one forming unit (9, 10) in manufacturing a wire comprising at least one layer of fibres wound around a central core (2), the fibre being previously coated with resin before said winding step,
• shaping of the wire around a mandrel (5) driven by a rotational movement, drawing the wire as it is being shaped and positioning the latter in a helicoidal shape,
**characterized in that** the fibres are cord fibres, **in that** the central core (2) is made from three coaxially assembled fibres, **in that** by means of at least two forming units (9, 10) positioned successively along the production line, the winding step consists in manufacturing a wire including at least two layers of fibres wound around the central core (2), each forming unit (9, 10) winding an additional layer of fibres around the central core (2), **in that** the mandrel (5) is of a complementary shape to the spring which is to be obtained, **in that** the resin is a thermoplastic resin and **in that** the method comprises at least the steps of:
• polymerisation, immediately after winding,
• connecting of the wire, consisting in heating the wire by heating means (25) disposed around the production line, so as to soften the preimpregnated resin in the fibres, for the adhesion of the fibres with one another.

2. The method according to Claim 1, **characterized in that** at least a portion of the heating means (25) is positioned before the mandrel (5).

3. The method according to Claim 1 or 2, **characterized in that** at least a portion of the heating means (25) is positioned around the mandrel (5).

4. The method according to any one of the preceding claims, **characterized in that** at least a portion of the heating means (25) is positioned between two forming units (9, 10), along the same production line, permitting the wire, during the winding step, to be heated before a new layer of fibre is wound around the central core (2).

5. The method according to any one of the preceding claims, **characterized in that** heating temperature of the wire is comprised between 180 and 260 °C.

6. The method according to any one of the preceding claims, **characterized in that** the central core is composed of a set of coaxial fibres, shaped at the start of the line.
